# EUROPÄISCHE PATENTSCHRIFT

(11) **EP 1 825 147 B1**
(45) Veröffentlichungstag und Bekanntmachung des Hinweises auf die Patenterteilung: **09.02.2011**
(21) Anmeldenummer: 05813370.3
(22) Anmeldetag: 05.12.2005
(51) Int. Cl.: F04D 27/02

(54) **VERFAHREN ZUM BETRIEB EINES STROMRICHTERGESPEISTEN VERDICHTERS**
METHOD FOR OPERATION OF A COMPRESSOR SUPPLIED BY A POWER CONVERTER
PROCEDE DE FONCTIONNEMENT D'UN COMPRESSEUR ALIMENTE PAR CONVERTISSEUR

(30) Priorität: 14.12.2004 DE 102004060206
(43) Veröffentlichungstag der Anmeldung: 29.08.2007
(73) Patentinhaber: SIEMENS AKTIENGESELLSCHAFT, 80333 München (DE)
(72) Erfinder: MERTENS, Axel, 91083 Baiersdorf (DE); NEESER, Gerhard, 91077 Neunkirchen (DE)
(86) Internationale Anmeldenummer: PCT/EP2005/056457
(87) Internationale Veröffentlichungsnummer: WO 2006/063947

(56) Entgegenhaltungen:
- EP-A2- 0 565 373
- EP-A2- 0 676 545
- US-A- 3 876 326
- US-A- 5 019 757
- US-A- 5 894 736
- US-A- 6 097 171

## Beschreibung

Die Erfindung bezieht sich auf ein Verfahren zum Betrieb eines stromrichtergespeisten Verdichters.

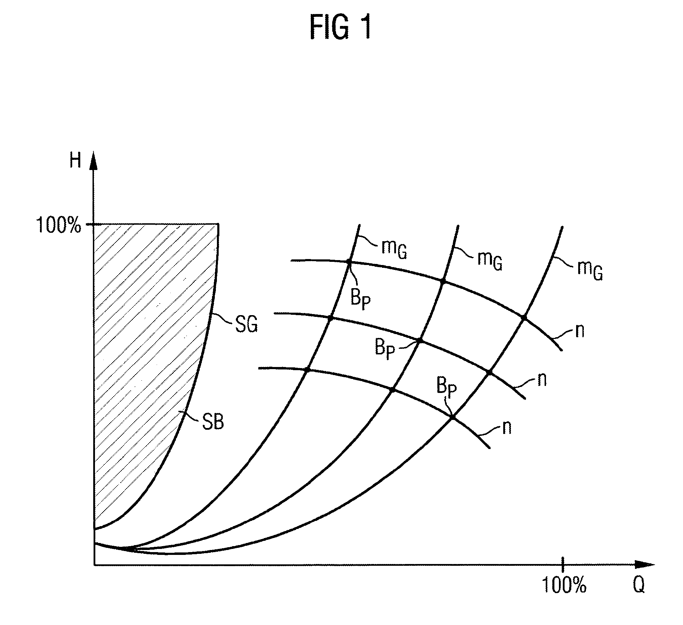

Unter normalen Umständen folgen Leistungsaufnahme, Drehmoment und Drehzahl von Verdichtern, beispielsweise Kreiselverdichter, Turboverdichter, festliegenden Proportionalitäten. Der Verlauf dieser Parameter lässt sich mit Kennlinienfeldern beschreiben. Insbesondere wird ein Diagramm aus Druck über Volumenstrom zur Darstellung eines Betriebszustandes des Verdichters verwendet. In der FIG 1 ist ein derartiges H-Q-Diagramm veranschaulicht. Unter normalen Bedingungen wird der Verdichter nur in einem zulässigen Bereich des Kennlinienfeldes betrieben. Mit Ausnahme des schraffierten Bereiches SB dieses Kennlinienfeldes ist der Bereich zulässig. Der schraffierte Bereich SB markiert einen unzulässigen Bereich SB des Verdichters, der unbedingt zu vermeiden ist. Wird ein Verdichter in diesem unzulässigen Bereich SB betrieben, kann dies zu einer Schädigung bzw. zur Zerstörung des Verdichters führen. Der Eintritt in diesen unzulässigen Bereich SB wird von einer sogenannten Pumpgrenzkennlinie SG, die auch als Surgegrenze bezeichnet wird, festgelegt. Gelangt ein Verdichter aus welchen Gründen auch immer in diesen unzulässigen Bereich SB, so liegt der Störfall "Pumpen" auch als Surge bezeichnet vor.

Der Störfall "Pumpen" (Surge) besteht darin, dass der Druck des Verdichters einen bestimmten, vom Volumenstrom Q abhängigen Wert überschreitet. D.h., im H-Q-Diagramm gemäß FIG 1 wird die Pumpgrenzkennlinie SG überschritten, so dass der Betriebspunkt des Verdichters im Störungsfall im schraffierten Bereich SG sich befindet. In einem solchen Störfall kommt es zum Strömungsabriss an den Schaufeln des Verdichters. Die Folge ist, dass der Differenzdruck H zusammenbricht, wodurch ein Teil des Volumenstroms Q rückwärts durch den Verdichter fließt. Die Verringerung des Differenzdruckes H bedeutet aber auch, dass der unzulässige Bereich SB des Verdichters wieder verlassen wird. Damit sind aber die gleichen Bedingungen wie vor dem Störfall erreicht und der Vorgang wiederholt sich zyklisch. Durch das Hin- und Herwechseln zwischen zulässigen und unzulässigen Bereich pumpt der Verdichter. Die Folge dieses Pumpen ist, dass die Schaufeln des Verdichters anfangen zu schwingen. Dadurch erhöht sich die Gefahr eines Schaufelbruches wesentlich. Außerdem kommt es durch dieses Pumpen des Verdichters zu großen Druckschwankungen im am Verdichter angeschlossenen Rohrsystem. Die Surgegrenze SG, die die Grenzkennlinie des zulässigen Bereichs kennzeichnet, ist abhängig von der Gasdichte bzw. bei gegebenen Material des Verdichters von der Temperatur des Gases.

Um diesen Störfall "Pumpen" feststellen zu können, werden bisher Betriebsparameter wie Druckdifferenz H, Volumenstrom Q, Gasdichte G_{D} oder Gastemperatur G_{T} gemessen. Diese Parameter werden einer Verdichtersteuerung zugeführt, die daraus einen Betriebspunkt im H-Q-Diagramm ermittelt. In dieser Verdichtersteuerung ist eine vorbestimmte Pumpgrenzkennlinie "Surgegrenze" hinterlegt. Bei Annäherung an diese Pumpgrenzkennlinie wird bei Verdichtern mit konstanter Drehzahl der Differenzdruck H durch ein mechanisches Stellglieder am Eingang des Verdichters verringert. Ein derartiges mechanisches Stellglied ist ein Eingangs-Leitschaufel-Apparat, der eine Stellzeit im Sekundenbereich aufweist. Bei Verdichtern mit veränderbarer Drehzahl wird die Drehzahl abgesenkt.

Ein Nachteil dieses bisherigen Verfahrens ist, dass der Störfall "Pumpen" erst dann erkannt wird, wenn der Strömungsabriss an den Verdichterschaufeln bereits eingesetzt hat. D.h., eine Schädigung der Schaufel hat bereits eingesetzt. Bei einem mehrstufigen Verdichter verändert sich der gesamte Volumenstrom Q und der gesamte Differenzdruck H zunächst nur wenig, so dass der Zustand erst erkannt wird, wenn dieser stark ausgeprägt ist. Bei einem einstufigen Verdichter tritt der unerwünschte Betriebspunkt schlagartig ein, so dass die konventionelle Erfassung und Steuerung nicht schnell genug reagieren kann. Dies hat zur Folge, dass nach einer vorbestimmten begrenzten Anzahl von Störfällen der Verdichter komplett überholt werden muss. Somit kann man trotz aufwendiger Mess- und Steuerungstechnik nur feststellen, dass ein Störfall "Pumpen" eingetreten ist. Eine rechtzeitige Erfassung und daraus resultierende Gegenmaßnahme ist nicht möglich.

Eine Auswahl von Dokumenten aus dem Stand der Technik die für den Gegenstand der vorliegenden Erfindung relevant sind, ist US-3876326-A1, US-5019757-A1, US-5894736-A1.

Der Erfindung liegt nun die Aufgabe zugrunde, ein Verfahren zum Betrieb eines stromrichtergespeisten Verdichters anzugeben, mit dem die Dauer als auch die Intensität von Surgezuständen erheblich verringert werden.

Diese Aufgabe wird erfindungsgemäß mit den Merkmalen des Anspruchs 1 gelöst.

Dadurch, dass aus Signalgrößen eines Antriebsstromrichters des Verdichters und einer abgespeicherten Pumpgrenzkennlinie ein Ist-Betriebszustand des Verdichters ermittelt wird, kann sehr schnell festgestellt werden, ob ein Betriebszustand existiert, der im unzulässigen Bereich des H-Q-Diagramms liegt. Die Schnelligkeit dieses Verfahrens wird vom Systemtakt der Regelung des Antriebsstromrichters bestimmt. Außerdem kann bei Feststellung eines unzulässigen Betriebszustandes mit Hilfe einer abgespeicherten drehzahlabhängigen Momentenkennlinie ein Steuersignal generiert werden, mit dem eine Signalgröße dieses Antriebsstromrichters reduziert wird, wodurch dieser unzulässige Betriebszustand wieder umgehend verlassen wird.

Im Antriebsstromrichter liegen die Größen Drehzahl und Drehmomente des Antriebs, d.h. hier des Verdichters, bereits für konventionelle Antriebsregelungen vor. Diese Größen werden sehr genau und in einem schnellen Abtastzyklus von beispielsweise 1 msec. ermittelt. Im stationären Zustand eines stromrichtergespeisten Verdichters ist die Größe Drehzahl des Antriebsstromrichters proportional zum Volumenstrom Q des Verdichters und die Größe Drehmoment des Antriebsstromrichters proportional zum Differenzdruck des Verdichters. Somit ist ein H-Q-Diagramm des Verdichters proportional zu einem M-n-Diagramm des Antriebsstromrichters. Da das Drehmoment M proportional zur Wirkstromkomponente eines Stromrichter-Ausgangsstromes ist, ist das H-Q-Diagramm des Verdichters auch proportional zum i_{w}-n-Diagramm des Antriebsstromrichters.

Auf diese Proportionalität beruht nun die Erfindung. Man verwendet beim erfindungsgemäßen Verfahren die Größen Moment und Drehzahl des Antriebsstromrichters und bestimmt daraus einen proportionalen Betriebszustand des Verdichters. Anschließend wird mittels einer abgespeicherten Pumpgrenzkennlinie festgestellt, ob dieser zulässig oder unzulässig ist. Bei einem unzulässigen Betriebszustand wird mittels einer abgespeicherten vorbestimmten drehzahlabhängigen Momentenkennlinie ein Steuersignal generiert, wodurch ein Verlassen dieses unzulässigen Betriebszustandes veranlasst wird.

Durch die Verwendung von bereits vorhandenen Antriebsgrößen kann auf zusätzliche Messgeräte verzichtet werden. Da die Taktfrequenz des Antriebsstromrichters im Millisekundenbereich und nicht im Sekundenbereich arbeitet, kann ein unzulässiger Betriebszustand eines stromrichtergespeisten Verdichters um ein vielfaches schneller ermittelt werden als bisher. Außerdem kann man in Abhängigkeit einer abgespeicherten drehzahlabhängigen Momentenkennlinie eine Steuergröße generierten, wodurch dieser ermittelte unzulässige Betriebszustand wieder verlassen wird. Das generierte Steuersignal entspricht einem Momentenwert der abgespeicherten drehzahlabhängigen Momentenkennlinie, das auf einer Momentenbegrenzung des Antriebsstromrichters einwirkt. Dadurch wird die Drehmomentgrenze zurückgenommen, so dass der Antrieb durch das geringere zugelassene Moment seine Drehzahl verringert und der Verdichter den unzulässigen Bereich wieder verlässt. Dadurch wird außerdem kein Eingangs-Leitschaufel-Apparat mehr benötigt. Da die Systemfrequenz des Antriebsstromrichters im Millisekundenbereich und nicht im Sekundenbereich arbeitet, kann der ermittelte Störfall viel schneller bekämpft werden als bisher.

Bei einer vorteilhaften Ausführungsform des erfindungsgemäßen Verfahrens wird die vorbestimmte Wirkstromkomponente des gemessenen Stromrichter-Ausgangsstromes oder ein ermittelter Momentendifferenzwert auf dynamische Veränderung überwacht. Wird jeweils ein vorgegebener dynamischer Grenzwert überschritten, so liegt ein Störfall unmittelbar bevor. Damit kann ein Eintreten des Surge-Zustandes sehr frühzeitig erkannt werden.

Eingangs wurde erwähnt, dass die Surgegrenze von der Gasdichte bzw. bei gegebenen Material des Verdichters von der Temperatur des Gases abhängig ist. Aus diesem Grund wird bei einer weiteren vorteilhaften Ausführungsform des erfindungsgemäßen Verfahrens die abgespeicherte drehzahlabhängige Momentenkennlinie an den Zustand eines zu verdichtenden Mediums angepasst. Die einfachste Ausführungsform ist eine Schar von drehzahlabhängigen Pumpgrenzkennlinien, die sich nur durch die Parameter Gasdichte und Gastemperatur unterscheiden. Mit Hilfe dieser beiden Parameter kann aus einer Schar von drehzahlabhängigen Pumpgrenzkennlinien die passende ausgewählt werden.

Wenn die drehzahlabhängige Momentenkennlinie vorzugsweise die Pumpgrenzkennlinie nachbildet, so wird ein Hineinfahren in den unzulässigen Bereich des stromrichtergespeisten Verdichters vermieden werden. Außerdem wird dann mit der Anpassung der Pumpgrenzkennlinie an das zu komprimierende Gas ebenfalls die drehzahlabhängige Momentenkennlinie an das Gas angepasst. Bei einer weiteren vorteilhaften Ausführungsform des erfindungsgemäßen Verfahrens wird die Reduzierung des Steuersignals nach einer vorbestimmten Zeitspanne rückgängig gemacht. Durch diese Zurücknahme des Steuersignals wird erkannt, ob die Bedingung, die zum Störfall führte, noch vorliegt. Ist der Auslöser des Störfalls noch vorhanden, wird ein Betriebszustand im unzulässigen Bereich des H-Q-Diagramms angefahren. Erfindungsgemäß wird dies erkannt und die erfindungsgemäße Gegenmaßnahme eingeleitet.

Bei einer weiteren Ausführungsform des erfindungsgemäßen Verfahrens wird die vorbestimmte Zeitspanne in Abhängigkeit der Häufigkeit des Auftretens des ermittelten unzulässigen Betriebszustandes verringert. Dadurch wird die Lebensdauer des Verdichters verlängert.

Bei einer weiteren Ausführungsform des erfindungsgemäßen Verfahrens wird bei Feststellung eines unzulässigen Betriebszustandes des Verdichters ein Warnsignal generiert. Dieses Warnsignal kann akustischer und/oder optischer Art sein. Damit kann der Prozesssteuerer erkennen, dass der Verdichter einen unzulässigen Surgezustand angefahren hat.

Durch die schnelle Reaktion des erfindungsgemäßen Verfahrens wird sowohl die Dauer als auch die Intensität von Surgezuständen im Vergleich mit konventionellen Verfahren erheblich verringert. Dadurch wird einerseits die Lebensdauer des Verdichters verlängert und andererseits durch Vermeidung von Druckstößen und Vibrationen die mechanische Beanspruchung des vorhandenen Rohrsystems verringert.

Zur weiteren Erläuterung der Erfindung wird auf die Zeichnung Bezug genommen, in der mehrere Ausführungsformen der Vorrichtung zur Durchführung des erfindungsgemäßen Verfahrens schematisch veranschaulicht sind.
- FIG 1: zeigt ein H-Q-Diagramm eines Verdichters, die
- FIG 2: zeigt ein Blockschaltbild eines stromrichterge- speisten Verdichters mit einer Vorrichtung zur Durchführung des erfindungsgemäßen Verfahrens, die
- FIG 3 bis 7: zeigen jeweils eine Ausführungsform der Vorrich- tung zur Durchführung des erfindungsgemäßen Ver- fahrens.

Im H-Q-Diagramm gemäß FIG 1 eines Verdichters sind Drehzahlkennlinien n und Kennlinien für Gegenmomentverläufe m_{G} dargestellt. Jeder Schnittpunkt einer Kennlinie m_{G} für ein Gegenmomentverlauf und einer Drehzahlkennlinie n stellt einen Betriebspunkt B_{P} eines stromrichtergespeisten Verdichters dar. Außerdem ist in diesem H-Q-Diagramm ein unzulässiger Bereich SB für einen stromrichtergespeisten Verdichter dargestellt, der zum zulässigen Bereich durch eine sogenannte Pumpgrenzkennlinie SG, auch als Surgegrenze SG bezeichnet, abgetrennt ist. Unter normalen Bedingungen wird ein Verdichter nur im zulässigen Bereich betrieben, wobei der Betriebspunkt B_{P} auf einer Kennlinie für einen Gegenmomentenverlauf liegt, die benachbart zur Surgegrenze SG verläuft. Je höher ein Verdichter ausgenutzt wird, um so näher liegt die Kennlinie m_{G} des Gegenmomentenverlaufs an der Surgegrenze SG. Diese Surgegrenze SG ist jedoch von der Gasdichte G_{D} und bei gegebenen Material des Verdichters von der Temperatur T des zu verdichtenden Gases G abhängig. Daraus resultiert ein Störfall, nämlich der Störfall "Pumpen". Bei diesem Störfall überschreitet der Druck einen bestimmten, vom Volumenstrom Q abhängigen Wert, d.h., die Surgegrenze SG wird überschritten. Dabei kommt es zum Strömungsabriss an den Schaufeln des Verdichters. Die Folge ist, dass der Differenzdruck H zusammenbricht, wodurch ein Teil des Volumenstroms Q rückwärts durch den Verdichter fließt. Durch die Verringerung des Differenzdruckes H wird der unzulässige Bereich SB, auch als Surgebereich bezeichnet, wieder verlassen. Damit sind aber die gleichen Bedingungen wie zu Beginn des Störfalls erreicht und der beschriebene Vorgang wiederholt sich zyklisch. Dadurch pumpt der Verdichter. Die Folge ist, dass die Schaufeln des Verdichters zu schwingen anfangen und im Rohrsystem treten hohe Druckschwankungen auf. Durch das Schwingen der Schaufeln des Verdichters besteht durch Materialermüdung die Gefahr der Bruch einer oder mehrerer Schaufeln. Wegen dieser Gefahr werden Verdichter nach einigen Störfällen "Pumpen" überholt.

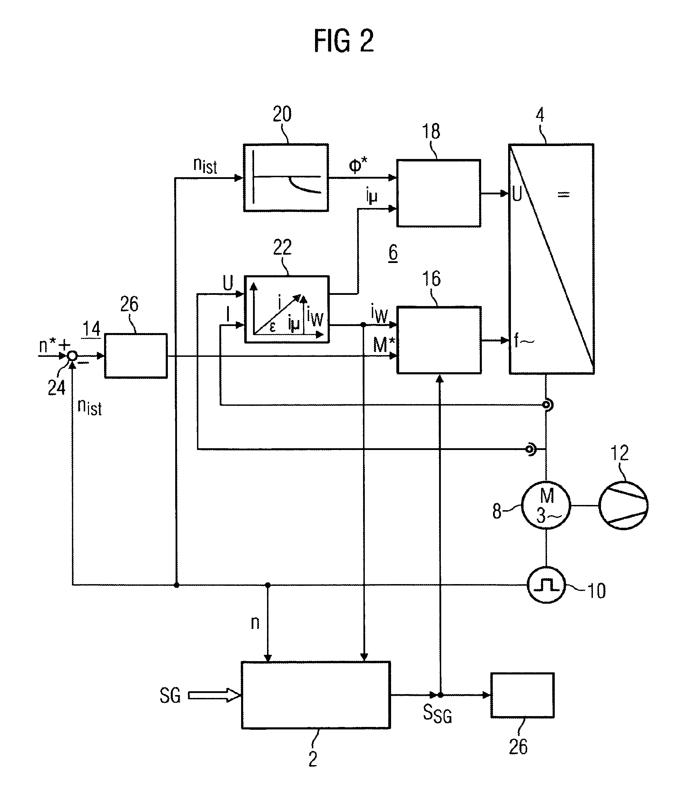

In FIG 2 ist ein Blockschaltbild eines stromrichtergespeisten Verdichters mit einer Vorrichtung 2 zur Durchführung des erfindungsgemäßen Verfahrens veranschaulicht. In diesem Blockschaltbild sind mit 4 ein lastseitiger Stromrichter, mit 6 eine feldorientierte Regelung, mit 8 ein Elektromotor, mit 10 eine Einrichtung zur Erfassung eines Drehzahl-Istwertes n und mit 12 ein Verdichter bezeichnet. Der Elektromotor 8 ist ständerseitig mit Ausgängen des lastseitigen Stromrichters 4, der auch als Wechselrichter bezeichnet wird, verknüpft. Der Verdichter 12 und die Einrichtung 10 zur Erfassung eines Drehzahl-Istwertes n sind mit der Antriebswelle des Elektromotors 8 verbunden. Der lastseitige Stromrichter 4 ist ein Teil eines Zwischenkreis-Umrichters. Gleichspannungsseitig ist dieser lastseitige Stromrichter 4 mit einem Zwischenkreis verknüpft an dem auch ein netzseitiger Stromrichter mit seinen gleichspannungsseitigen Ausgängen angeschlossen ist. Aus Übersichtlichkeitsgründen ist von diesem Zwischenkreis-Umrichter nur der lastseitige Stromrichter 4 dargestellt.

Die feldorientierte Regelung 6 weist einen Drehzahlregelkreis 14 mit unterlagertem Drehmomentregelkreis 16, einen Flussregelkreis 18, einen Fluss-Sollwertbildner 20 und einen Flussrechner 22 auf. Der Drehzahlregelkreis 14 weist einen Vergleicher 24 und einen Drehzahlregler 26 auf. Der Drehmomentregelkreis 16 weist ebenfalls einen Vergleicher und einen Regler auf, die im einzelnen nicht näher dargestellt sind. Der Vergleicher 24 bildet aus einem vorbestimmten Drehzahl-Sollwert n* und einem ermittelten Drehzahl-Istwert n eine Regeldifferenz, die mittels des nachgeschalteten Drehzahlregler 26 zu Null geregelt wird. Am Ausgang des Drehzahlreglers 26 steht ein Momenten-Sollwert M* an, der dem Drehmomentregelkreis 16 zugeführt ist. Der Flussrechner 22 berechnet in Abhängigkeit eines gemessenen Stromrichter-Ausgangsstromes I und einer gemessenen Stromrichter-Ausgangsspannungen U in Verbindung mit Motorparametern eine drehmomentbildende und eine flussbildende Stromkomponente i_{w} und i_{µ}. Die drehmomentbildende Stromkomponente i_{w}, auch als Wirkstromkomponente bezeichnet, ist dem Drehmomentregelkreis 16 zugeführt. Die flussbildende Stromkomponente i_{µ} ist dem Flussregler 18 zugeführt, dessen zweiter Eingang mit einem Ausgang des Fluss-Sollwertbildners 20 verknüpft ist, an dessen Ausgang ein Fluss-Sollwert φ* ansteht. Eingangsseitig ist dieser Fluss-Sollwertbildner 20 mit der Einrichtung 10 zur Erfassung eines Drehzahl-Istwertes n verbunden. Diese bekannte feldorientierte Regelung 6 erzeugt eine Stellspannung, insbesondere deren Komponenten Betrag U und Frequenz f, die dem lastseitigen Stromrichter 4 zugeführt sind. Aus diesen Komponenten U, f der Sollspannung werden Steuersignale für die Halbleiterschalter des Wechselrichters 4 generiert.

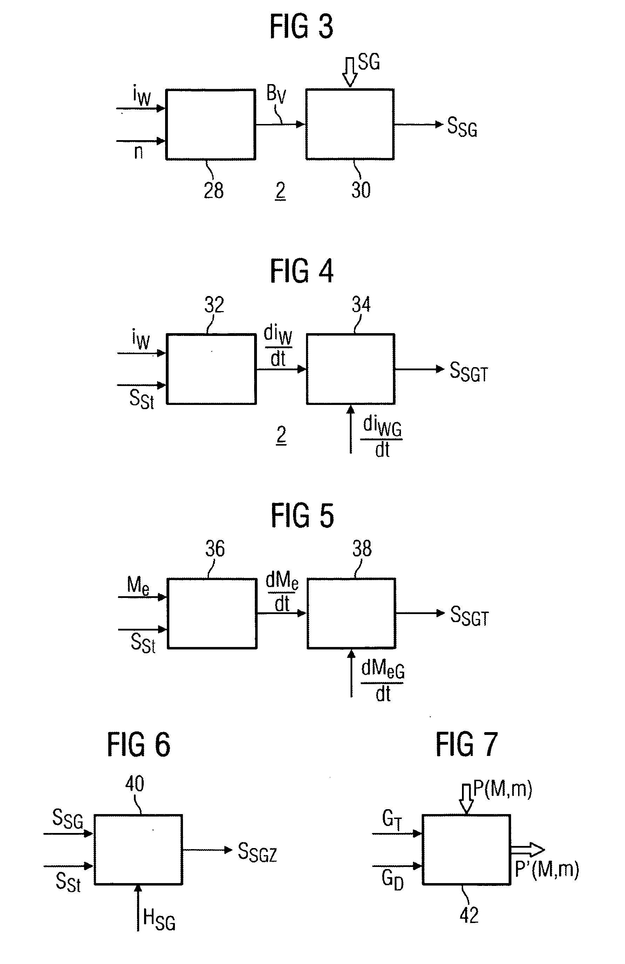

Die Vorrichtung zur Durchführung des erfindungsgemäßen Verfahrens verarbeitet entsprechend dem erfindungsgemäßen Verfahren die Größen Drehzahl n und Drehmoment M bzw. drehmomentbildende Stromkomponente i_{w} des Antriebs, bestehend aus Wechselrichter und Elektromotor 8. Das Ergebnis ist ein Steuersignal S_{SG}, das dem Drehmomentregelkreis 16 zugeführt ist. Dieses Steuersignal S_{SG} ist außerdem einer Einrichtung 26 zur Generierung eines Warnsignals zugeführt. Neben diesen Größen Drehzahl n, Drehmoment M bzw. drehmomentbildende Stromkomponente i_{w} des Antriebs werden der Vorrichtung 2 eine Pumpgrenzkennlinie (Surgegrenze) SG und eine drehzahlabhängige Momentenkennlinie zugeführt. Ausführungsform dieser Vorrichtung 2 sind den FIG 3 bis 7 zu entnehmen.

Gemäß der FIG 3 weist die FIG 2 eingangsseitig einen Betriebspunktbildner 28 auf, der in Abhängigkeit der anstehenden Größen Drehzahl n und drehmomentbildende Stromkomponente i_{w} des Antriebsstromrichters und eines H-Q-Diagramms (FIG 1) einen Betriebspunkt B_{V} des stromrichtergespeisten Verdichters 12 ermittelt. Anschließend wird in einer nachgeschalteten Einrichtung 30 zur Zulässigkeitsprüfung mit Hilfe der abgespeicherten Surgegrenze SG, überprüft, ob der Betriebspunkt B_{V} des stromrichtergespeisten Verdichters 12 im unzulässigen Bereich SB liegt. Wird dies bejaht, so steht am Ausgang dieser Einrichtung 30 ein Steuersignal S_{SG} an, das in Abhängigkeit der abgespeicherten drehzahlabhängigen Momentenkennlinie generiert wurde und dem Drehmomentregler 16 der feldorientierten Regelung 6 des stromrichtergespeisten Verdichters 12 zugeführt wird. Mittels diesem Steuersignal S_{SG} wird im Drehmomentregelkreis 16 die Drehmomentgrenze derart zurückgenommen, dass der Antrieb durch das geringere zugelassene Drehmoment seine Drehzahl n verringert und der Verdichter 12 aus dem unzulässigen Bereich SB herauskommt und nicht wieder in diesen gelangt.

In der FIG 4 ist eine weitere Ausführungsform der Vorrichtung 2 nach FIG 2 näher dargestellt. Diese Ausführungsform weist eingangsseitig eine Einrichtung 32 zur Ermittlung einer Änderungsgeschwindigkeit d/dt der ermittelten drehmomentbildende Stromkomponente i_{w} und ausgangsseitig einen Komparator 34 auf, der eingangsseitig mit einem Ausgang der Einrichtung 32 verknüpft ist. Damit aus der gebildeten Stromkomponente i_{w}, deren zeitliche Veränderung ermittelt werden kann, wird mittels eines Startsignals S_{St} ein vorbestimmtes Zeitfenster gestartet. Mit Ablauf dieses Zeitfensters hat man einen Anfangs- und einen Endwert. Die Differenz von Endwert und Anfangswert bezogen auf die durch das Zeitfenster bestimmte Zeitspanne ergibt die momentane Änderung di_{w}/dt der Stromkomponente i_{w}. Mittels dem nachgeschalteten Komparator 34, an dessen zweiten Eingang ein Änderungsgrenzwert di_{WG}/dt ansteht, wird die dynamische Änderung di_{w}/dt der Stromkomponente i_{w} überwacht. Wird der Grenzwert di_{WG}/dt überschritten, so wird ein Triggersignal S_{SGT} zur Generierung eines Steuersignals S_{SG} in Abhängigkeit der Parameter des momentanen Betriebspunktes B_{V} und der abgespeicherten drehzahlabhängigen Momentenkennlinie aktiviert. Mit dieser dynamischen Überwachung der drehmomentbildenden Stromkomponente i_{w} erhält man sehr frühzeitig einen Hinweis, dass die Surgegrenze SG überschritten wird. Somit kann bereits vor Überschreitung dieser Surgegrenze SG bzw. mit Überschreitung dieser Surgegrenze SG die Gegenmaßnahme bereits aktiviert sein.

In der FIG 5 ist eine weitere Ausführungsform der Vorrichtung 2 gemäß FIG 2 veranschaulicht. Bei dieser Ausführungsform wird eine Soll-Ist-Abweichung Mₑ des Drehmoments M dynamisch überwacht. D.h., diese Ausführungsform entspricht der Ausführungsform gemäß FIG 4, wobei an Stelle der drehmomentbildenden Stromkomponente i_{w} eine Drehmomentabweichung Mₑ und an Stelle des Änderungsgrenzwertes di_{WG}/dt für die dynamische Überwachung der drehmomentbildenden Stromkomponente i_{w} ein Änderungsgrenzwert dM_{eG}/dt für die dynamische Überwachung der Drehmomentabweichung Mₑ verwendet werden. Ausgangsseitig steht ebenfalls ein Triggersignal S_{SGT} zur Triggerung eines generierten Steuersignals S_{SG} an.

In der FIG 6 ist eine Vorrichtung 40 zur Zurücknahme des Steuersignals S_{SG} dargestellt. Dieser Vorrichtung 40 wird einerseits ein generiertes Steuersignal S_{SG} und andererseits ein Startsignal S_{St} zugeführt. Mit der Generierung des Steuersignals S_{SG} wird gleichzeitig das Startsignal S_{St} aktiviert, mit dem ein Zeitfenster gestartet wird. Nach Ablauf des Zeitfensters ist das am Ausgang stehende Steuersignal S_{SGZ} Null. Mit dieser Aufhebung des Steuersignals S_{SG} kann man erkennen, ob die Bedingungen, die zum Störfall geführt haben, noch vorliegen. Der Zeitpunkt dieser Rücknahme kann vorteilhafter Weise in Abhängigkeit der Häufigkeit des Auftretens des Ereignisses angepasst werden. Deshalb ist der Vorrichtung 40 ein sogenanntes Häufigkeitssignal H_{SG} zugeführt. D.h., mit jedem weiteren Auftreten des Ereignisses wird der Zeitpunkt der Rücknahme des Steuersignals S_{SG} auf später verschoben. Wie bereits erwähnt, ist die Surgegrenze SG von der Gasdichte G_{D} und der Temperatur T des zu verdichtenden Gases G abhängig. Dadurch kann es vorkommen, dass die abgespeicherte drehzahlabhängige Momentenkennlinie, die auf eine Momentenbegrenzung des Antriebsstromrichters einwirkt, mit der Surgegrenze SG zusammenfällt bzw. die Surgegrenze SG sich so verlagert hat, dass die abgespeicherte drehzahlabhängige Momentenkennlinie im unzulässigen Bereich SB liegt. Dadurch würde im Störfall das generierte Steuersignal S_{SG} keine Wirkung mehr entfalten. Gemäß der Ausführungsform nach FIG 7 ist eine Vorrichtung 42 vorgesehen, mit der die abgespeicherte drehzahlabhängige Momentenkennlinie P(M,N) an die Gasdichte G_{D} und der Gastemperatur G_{T} angepasst wird. Am Ausgang dieser Vorrichtung 42 steht dann eine korrigierte drehzahlabhängige Drehmomentenkennlinie P'(M,n) an. Dadurch kann nun der Verdichter 12 näher an der tatsächlichen Surgegrenze SG betrieben werden, wodurch dieser Verdichter 12 höher ausgenutzt werden kann. Bildet die abgespeicherte drehzahlabhängige Momentenkennlinie eine Surgegrenze SG ab, so wird erreicht, dass ein Hineinfahren in den Surgebereich SB vermieden wird.

Durch die schnelle Reaktion dieses erfindungsgemäßen Verfahrens wird sowohl die Dauer als auch die Intensität von Surge-Zuständen im Vergleich mit konventionellen Verfahren erheblich verringert. Dadurch wird einerseits die Lebensdauer des Verdichters verlängert, andererseits durch Vermeidung von Druckstößen und Vibrationen die mechanische Beanspruchung des Rohrsystems verringert.

## Patentansprüche

1. Verfahren zum Betrieb eines stromrichtergespeisten Verdichters (12), wobei ein aus einem gemessenen Drehzahl-Istwert (n) dieses Verdichters (12) und einer Wirkstromkomponente (i_{w}), die aus einem gemessenen Stromrichter-Ausgangstrom (I) berechnet wird, gebildeter Betriebszustand (Bᵥ) des stromrichtergespeisten Verdichters (12) anhand einer abgespeicherten drehzahlabhängigen Pumpgrenzkennlinie (SG) derart auf Zulässigkeit überwacht wird, dass bei Feststellung der Unzulässigkeit ein Steuersignal (S_{SG}) zur Reduzierung eines Drehmoments (M) generiert wird, wobei das Steuersignal von einer abgespeicherten, drehzahlabhängigen Momentenkennlinie abhängt.

2. Verfahren nach Anspruch 1,
**dadurch gekennzeichnet, dass** die berechnete Wirkstromkomponente (i_{w}) des gemessenen Stromrichter-Ausgangsstromes (I) derart auf dynamische Veränderungen überwacht wird, dass bei Überschreitung eines vorbestimmten dynamischen Grenzwertes (di_{WG}/dt) die Drehmomentgrenze zurückgenommen wird.

3. Verfahren nach einem der vorgenannten Ansprüche,
**dadurch gekennzeichnet, dass** einer aus einem gemessenen Drehzahl-Istwert (n) und einem vorbestimmten Drehzahl-Sollwert (n*) ermittelter Momenten-Sollwert (M*) und der berechneten Wirkstromkomponente (i_{w}) des Stromrichter-Ausgangsstromes (I) gebildeter Momentendifferenzwert (Mₑ) derart auf dynamische Veränderungen überwacht wird, dass bei Überschreitung eines vorbestimmten dynamischen Grenzwertes (dM_{eG}/dt) eine Drehmomentgrenze zurückgenommen wird.

4. Verfahren nach einem der vorgenannten Ansprüche,
**dadurch gekennzeichnet, dass** die abgespeicherte drehzahlabhängige Momentenkennlinie an einem Zustand eines zu verdichtenden Mediums angepasst wird.

5. Verfahren nach einem der vorgenannten Ansprüche, **dadurch gekennzeichnet, dass** die drehzahlabhängige Momenentkennlinie eine Pumpgrenzkennlinie nachbildet.

6. Verfahren nach einem der vorgenannten Ansprüche,
**dadurch gekennzeichnet, dass** das generierte Steuersignal (S_{SG}) nach einer vorbestimmten Zeitspanne rückgängig gemacht wird.

7. Verfahren nach Anspruch 6,
**dadurch gekennzeichnet, dass** die vorbestimmte Zeitspanne in Abhängigkeit der Häufigkeit des Auftretens des ermittelten unzulässigen Betriebszustandes verlängert wird.

8. Verfahren nach einem der vorgenannten Ansprüche,
**dadurch gekennzeichnet, dass** bei Feststellung eines unzulässigen Betriebszustandes des Verdichters (12) eine Warnmeldung generiert wird.

9. Verfahren nach Anspruch 7,
**dadurch gekennzeichnet, dass** die Warnmeldung akustisch ist.

10. Verfahren nach Anspruch 7,
**dadurch gekennzeichnet, dass** die Warnmeldung optisch ist.

## Claims

1. Method for operation of a compressor (12) supplied by a power converter, an operating state (Bᵥ) of the compressor (12) supplied by a power converter, which is formed from a measured actual rotational speed value (n) of this compressor (12) and an active current component (i_{w}) which is calculated from a measured power converter output current (I), using a stored pump limit characteristic curve (SG) that depends on the rotational speed, being monitored for reliability in such a manner that, when unreliability is determined, a control signal (S_{SG}) for reducing a torque (M) is generated, the control signal depending on a stored torque characteristic curve that depends on the rotational speed.

2. Method according to Claim 1,
**characterized in that** the calculated active current component (i_{w}) of the measured power converter output current (I) is monitored for dynamic changes in such a manner that, when a predetermined dynamic limit value (di_{WG}/dt) is exceeded, the torque limit is reduced.

3. Method according to one of the abovementioned claims,
**characterized in that** a torque difference value (Mₑ) which is formed from a desired torque value (M*), which is determined from a measured actual rotational speed value (n) and a predetermined desired rotational speed value (n*), and from the calculated active current component (i_{w}) of the power converter output current (I) is monitored for dynamic changes in such a manner that, when a predetermined dynamic limit value (dM_{eG}/dt) is exceeded, a torque limit is reduced.

4. Method according to one of the abovementioned claims,
**characterized in that** the stored torque characteristic curve that depends on the rotational speed is matched to a state of a medium to be compressed.

5. Method according to one of the abovementioned claims,
**characterized in that** the torque characteristic curve that depends on the rotational speed emulates a pump limit characteristic curve.

6. Method according to one of the abovementioned claims,
**characterized in that** the generated control signal (S_{SG}) is canceled after a predetermined period of time.

7. Method according to Claim 6,
**characterized in that** the predetermined period of time is extended on the basis of the frequency with which the impermissible operating state that has been determined occurs.

8. Method according to one of the abovementioned claims,
**characterized in that** a warning message is generated when an impermissible operating state of the compressor (12) is determined.

9. Method according to Claim 7,
**characterized in that** the warning message is acoustic.

10. Method according to Claim 7,
**characterized in that** the warning message is optical.

## Revendications

1. Procédé pour faire fonctionner un compresseur ( 12 ) alimenté par convertisseur, dans lequel on contrôle au moyen d'une caractéristique ( SG ) limite de pompe, mémorisée et dépendante de la vitesse de rotation, la fiabilité d'un état ( Bᵥ ) de fonctionnement du compresseur ( 12 ) alimenté par convertisseur, cet état de fonctionnement étant formé à partir d'une valeur ( n ) réelle mesurée de vitesse de rotation de ce compresseur ( 12 ) et d'une composante ( i_{w} ) de courant actif, qui est calculée à partir d'un courant ( I ) de sortie de convertisseur mesuré, de manière à produire, si l'on constate l'absence de fiabilité, un signal ( S_{SG} ) de commande pour réduire un couple ( M ) de rotation, le signal de commande dépendant d'une caractéristique de couple, mémorisée et dépendante de la vitesse de rotation.

2. Procédé suivant la revendication 1,
**caractérisé en ce que** l'on contrôle les variations dynamiques de la composante ( i_{w} ) de courant actif calculée du courant ( I ) de sortie de convertisseur mesuré, de manière à ce que, si une valeur ( di_{WG}/dt ) limite dynamique déterminée à l'avance est dépassée, la limite du couple de rotation est diminuée.

3. Procédé suivant l'une des revendications précédentes,
**caractérisé en ce que** l'on contrôle des variations dynamiques d'une valeur ( Mₑ )de différence de couple formée à partir d'une valeur ( M* ) de consigne de couple, déterminée à partir d'une valeur ( n ) réelle de vitesse de rotation mesurée et d'une valeur ( n* ) de consigne de vitesse de rotation déterminée à l'avance, et de la composante ( i_{w} ) de courant actif calculée du courant ( I ) de sortie du convertisseur, de manière à ce que, si une valeur ( dM_{eG}/dt ) limite dynamique déterminée à l'avance est dépassée, une limite de couple de rotation soit diminuée.

4. Procédé suivant l'une des revendications précédentes,
**caractérisé en ce que** l'on adapte la caractéristique de couple mémorisée, qui dépend de la vitesse de rotation, à un état d'un fluide à comprimer.

5. Procédé suivant l'une des revendications précédentes,
**caractérisé en ce que** la caractéristique de couple, qui dépend de la vitesse de rotation, reproduit une caractéristique limite de pompe.

6. Procédé suivant l'une des revendications précédentes, **caractérisé en ce que** l'on fait revenir le signal ( S_{SG} ) de commande produit après un laps de temps déterminé à l'avance.

7. Procédé suivant l'une la revendication 6,
**caractérisé en ce que** l'on prolonge le laps de temps déterminé à l'avance en fonction de la fréquence de l'apparition de l'état de fonctionnement inadmissible qui est déterminée.

8. Procédé suivant l'une des revendications précédentes,
**caractérisé en ce que**, si l'on constate un état de fonctionnement inadmissible du compresseur ( 12 ), on produit un message d'avertissement.

9. Procédé suivant la revendication 7,
**caractérisé en ce que** le message d'avertissement est acoustique.

10. Procédé suivant la revendication 7,
**caractérisé en ce que** le message d'avertissement est visuel.
